# EUROPÄISCHE PATENTANMELDUNG

(11) **EP 1 416 214 A1**
(43) Veröffentlichungstag der Anmeldung: **06.05.2004**
(21) Anmeldenummer: 03103884.7
(22) Anmeldetag: 21.10.2003
(51) Int. Cl.: F16L 37/084, F15B 13/00

(54) **Ventil mit Mitteln zur Befestigung eines Anschlussrohrstücks**

(30) Priorität: 30.10.2002 DE 10250593
(71) Anmelder: Rexroth Mecman GmbH, 30453 Hannover (DE)
(72) Erfinder: MÖLLER, Rudolf, 30989 Gehrden (DE)
(74) Vertreter: Kietzmann, Lutz

(57) **Zusammenfassung**

Ventil zum Schalten eines Druckmittelflusses, insbesondere elektropneumatisches Mehrwegeventil, mit einem eine Ventilmechanik enthaltenden Ventilkörper (1), an dem mindestens eine Anschlussöffnung (3) zur Aufnahme eines Anschlussrohrstücks (2) für die ventilgesteuerte Beaufschlagung eines nachgeordneten Druckmittelaggregats vorgesehen ist, wobei in dem Bereich vor der Anschlussöffnung (3) ein blechzungenartiges Verbindungselement (4) mit einer zu der Anschlussöffnung (3) korrespondierenden, benachbarten Aufnahmeöffnung (7) angeordnet ist, wobei der Winkel zwischen der Querschnittsfläche der Aufnahmeöffnung (7) und der Querschnittsfläche der Anschlussöffnung (3) bei Betätigung des am Ventilkörper (1) befestigten Verbindungselements (4) veränderbar ist, um ein Verklemmen oder ein Lösen eines Anschlussrohrstücks (2) zu realisieren.

## Beschreibung

Die Erfindung betrifft ein Ventil zum Schalten eines Druckmittelflusses, insbesondere elektropneumatisches Mehrwegventil, mit einem eine Ventilmechanik enthaltenden Ventilkörper, an dem mindestens eine Anschlussöffnung zur Aufnahme eines Anschlussrohrstücks für eine Arbeitsleitung oder eine Speisedruckleitung vorgesehen ist.

Derartige Ventile kommen in fast allen Bereichen der Technik zum Einsatz. Insbesondere in der Antriebs- und Steuertechnik sind derartige Ventile weit verbreitet. Typische Beispiele von hier einschlägigen Ventilen sind Wege-, Sperr-, Strom- und sonstige Sonderventile.

Die allgemein bekannten Ventile bestehen im Prinzip aus einem Ventilkörper, in welchem eine Ventilmechanik zum Schalten des den Ventilkörper durchströmenden Druckmittelflusses untergebracht ist. Die Ventilmechanik kann beispielsweise aus einem herkömmlichen Ventilschieber bestehen, welcher druckmittelvermittelnd zwischen einem Speisedruckanschluss sowie einem Entlüftungsanschluss einerseits, sowie mindestens einem Arbeitsanschluss andererseits nach Art eines 3/2-Wege-Ventils oder dergleichen schaltet. Der Arbeitsanschluss steht gewöhnlich über eine Verbindungsrohrleitung mit einem Druckmittelaggregat - beispielsweise einem Pneumatikzylinder - in Verbindung, um die Beaufschlagung mit Druckmittel zu steuern. Zu diesem Zwecke ist die Ventilmechanik des Ventils über eine elektromagnetische Antriebseinheit betätigbar. Elektrische Ansteuerungssignale gelangen mittels eines Datenbusses oder über eine konventionelle Verdrahtung an die elektromagnetische Antriebseinheit des Ventils.

In jüngster Zeit geht der technische Trend bei Ventileinheiten vermehrt in Richtung einer möglichst kompakten Bauform. Moderne Ventileinheiten sind in der Lage, bei minimalen äußeren geometrischen Abmessungen eine hohe Durchflussrate des Druckmittels zu gewährleisten. Allerdings stößt dieses Ziel wegen bisher bestehender konstruktiver Restriktionen an seine Grenzen. So wird die Breite eines bei einer Ventileinheit verwendeten Ventils im Wesentlich auch durch die Anschlussmittel bestimmt, welche sich an der Schmalseite des Ventilkörpers befinden. Als Anschlussmittel kommen hier gewöhnlich Push-In-Fittings oder Verschraubungen zum Einsatz. Ein Push-In-Fitting stellt eine mechanische Verbindung zu einer hierin einsteckbaren Anschlussrohrleitung direkt beim Einstecken her. Hierbei kommen widerhakenartige Krallen in die Außenwandung der gewöhnlich aus Kunststoff bestehenden Anschlussrohrleitung zum Eingriff. Diese mechanische Verbindung ist über einen die Anschlussrohrleitung umgebenden Betätigungsring des Push-In-Fittings wieder lösbar, welcher die widerhakenartigen Krallen von der Wandung der Verbindungsrohrleitung abhebt, so dass die Verbindungsrohrleitung nachfolgend aus dem Push-In-Fitting widerstandslos herausziehbar ist.

Der Platzbedarf für die Bauteile des Push-In-Fittings oder einer Verschraubung sind bezogen auf den Außendurchmesser der Verbindungsrohrleitung allerdings relativ groß und bestimmen die minimale Breite des Ventilkörpers. Somit ist bei diesen sehr kompakten, schmalen Ventilen die Höhe des Durchflusses begrenzt durch die Anschlussmittel, weil diese an der Schmalseite des Ventils einer Ventileinheit vorzusehen sind. Als Beispiel soll hier ein 10 mm -Ventil mit ca. 500 NL Durchfluss herangezogen werden. Dieses Ventil erfordert eine Schlauchgröße von 6 x 1 (4 mm Innendurchmesser). Die derzeit verwendeten Push-In-Fittings für ein 6 x 1 Rohr erfordern einen Einsteckdurchmesser von 10 mm im Gehäuse. Diese sind somit nicht für ein 10 mm breites Ventil geeignet.

Es ist daher die Aufgabe der vorliegenden Erfindung ein Ventil der vorstehend vorgestellten Art dahingehend weiter zu verbessern, dass eine größtmögliche Durchflussrate bei minimalen geometrischen Abmessungen des Ventilkörpers realisierbar ist, um die Kompaktheit einer hieraus bestehenden Ventileinheit zu erhöhen.

Diese Aufgabe wird ausgehend von einem erfindungsge mäßen Ventil gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass an dem mindestens eine Anschlussöffnung zur Aufnahme eines Anschlussrohrstücks aufweisenden Ventilkörper in dem Bereich vor der Anschlussöffnung ein blechzungenartiges Verbindungselement mit einer zu der Anschlussöffnung korrespondierenden, benachbarten Aufnahmeöffnung angeordnet ist, wobei der Winkel zwischen der Querschnittsfläche der Aufnahmeöffnung und der Querschnittsfläche der Anschlussöffnung bei Betätigung des am Ventilkörper befestigten Verbindungselements veränderbar ist, um ein Verklemmen oder ein Lösen eines Anschlussrohrstücks zu realisieren.

Diese Lösung bietet den Vorteil, dass das Verbindungselement die gesamte Breite des Ventils zur Verbindung des Ventils mit einem Anschlussrohrstücks ausnutzt und somit ein besonders schmal bauendes Ventil ermöglicht, wobei die Durchflussrate nicht reduziert ist.

Die Anschlussöffnung kann dabei ebenso wie die Aufnahmeöffnung einen beliebigen Öffnungsquerschnitt aufweisen. Die beiden Öffnungen sind vorzugsweise so angeordnet, dass ein Anschlussrohrstück ohne Wesentliche Umlenkung, Knickung oder sonstige Deformationen in den beiden Öffnungen gelagert beziehungsweise in die beiden Öffnungen eingesteckt werden kann.

Die Betätigung des Verbindungselements erfolgt vorzugsweise manuell, das heißt über menschliche Muskelkraft. Andere Betätigungsarten, etwa auf Grund einer gewünschten Automatisierung, sind ebenfalls denkbar.

Eine weitere die Erfindung verbessernde Maßnahme sieht vor, dass die Anschlussöffnung des Ventilkörpers zur Aufnahme des Anschlussrohrstücks als eine abgestufte Bohrung ausgebildet ist, um durch die Abstufung die Einstecktiefe des Anschlussrohrstücks zu begrenzen.

Durch die abgestufte Bohrung erhält man zum einen eine Anschlussöffnung beziehungsweise eine als Bohrung ausgebildete Anschlussöffnung mit verschiedenen Öffnungsbeziehungsweise Bohrungsdurchmessern. Damit lassen sich verschiedene Anschlussrohrstücke die unterschiedliche Rohrdurchmesser aufweisen mit dem Ventil verbinden. Zum anderen erhält man durch die verschiedenen Bohrungsdurchmesser Stoßkanten, welche die Einstecktiefe des Anschlussrohrstücks begrenzen. Prinzipiell könnte die Anzahl der verschiedenen Abstufungen der Bohrung in beliebiger Anzahl ausgebildet werden, was jedoch zu einem enorm hohen Herstellungsaufwand führen würde. Aus diesem Grund sind in die Bohrungen verschiedene Buchsen einsetzbar, deren Außendurchmesser an die Bohrungsöffnung angepasst ist, und deren Innendurchmesser an den Außendurchmesser des Anschlussrohrstücks angepasst ist. Auf diese Weise lassen sich Anschlussrohre verschiedenen Durchmessers mit dem Ventil auf einfache Weise verbinden. Die Stoßkanten dienen hier zur Begrenzung der Einstecktiefe der Buchse. Die Buchse kann ebenfalls eine oder mehrere Stoßkanten zur Begrenzung der Einstecktiefe des Anschlussrohrstücks aufweisen.

Vorzugsweise weist das blechzungenartige Verbindungselement des Ventils mindestens einen ersten, nicht federnden Bereich und einen zweiten, federnden Bereich auf, wobei der zweite, federnde Bereich im Wesentlichen aus Federblech hergestellt ist. Auf diese Weise lässt sich ein einfaches Verbindungselement mit den gewünschten Eigenschaften herstellen. Eigenschaften im Sinne dieser Erfindung sind insbesondere eine hohe Stabilität des Verbindungselements in dem Bereich, in dem das Verbindungs element mit dem Ventil verbunden ist und eine hohe Elastizität in dem federnden Bereich, welcher zur Verbindung des Anschlussrohrstücks dient.

Um plastische Verformungen des Verbindungselements bei Betätigung zu verhindern, ist eine als Anschlag ausgebildete Begrenzung vorgesehen. Der federnde Bereich des Verbindungselements besteht vorzugsweise aus Materialen, die eine gewisse Auslenkung zulassen, bei denen noch keine plastische Verformung erfolgt. Üblicherweise wird hierfür die Streckgrenze oder auch die s_{0,2} - Grenze herangezogen. Geeignet Materialien sind insbesondere Federblech oder Materialien, die ähnliche Streckgrenzen aufweisen.

Das Verbindungselement kann dabei aus einem einzigen Material oder als Verbundwerkstoff aus mehreren Materialien hergestellt sein. Ist das Verbindungselement aus einem einzigen Material hergestellt, so ist durchgehend ein federndes Material wie Federstahl zu verwenden. Dieses Material sollte in dem nicht federnden Bereich durch konstruktive Maßnahmen so ausgebildet sein, dass dieser im Gegensatz zu dem federnden Bereich keine oder nur minimale elastische Auslenkungen zulässt. Eine Stabilisierung ist beispielsweise durch Biegung, Knickung, Versteifungen oder ähnliche Maßnahmen zu erreichen.

Vorteilhaft ist es, dass das Verbindungselement mit seinem ersten, nicht federnden Bereich im Bereich der Anschlussöffnung mit dem Ventilkörper ortsfest verbunden ist. Dadurch lässt sich das Verbindungselement dauerhaft am Ventilkörper befestigen. Durch die ortsfeste Verbindung mit dem Ventilkörper kann zudem das Verbindungselement durchgängig aus einem federnden Material hergestellt werden. Um die notwendige Stabilität in dem Bereich zu erreichen, in dem das Verbindungselement mit dem Ventilkörper verbunden ist, lassen sich neben den vorstehend erwähnten Maßnahmen an dem Verbindungselement weitere Maßnahmen an dem Ventilkörper vornehmen. So kann vorzugsweise der gesamte Bereich durch einen als Gegenlager ausgebildeten Bereich des Ventilkörpers stabilisiert werden. Diese Ausbildung ermöglicht es, genau den federnden Bereich und den nicht federnden Bereich zu definieren.

Vorzugsweise ist der federnde Bereich in axialer Richtung der Anschlussöffnung elastisch verformbar, um eine einfache Betätigung des Verbindungselements zu ermöglichen. Das Verbindungselement weist zwischen dem federnden Bereichs und dem nicht federnden Bereich einen neutralen Bereich auf. Je nach der Abgrenzung des federnden und des nicht federnden Bereichs kann der neutrale Bereich unterschiedlich ausgeprägt sein, zum Beispiel als schmale Kante, punktförmiger Bereich oder als flächiger Bereich. Eine elastische Verformbarkeit des federnden Bereichs in axialer Richtung der Anschlussöffnung hat den Vorteil, dass sich das Verbindungselement durch Drücken betätigen lässt. Dadurch wird weniger Bauraum als beispielsweise bei einer Betätigung durch Ziehen benötigt.

Ein weiterer Vorteil lässt sich dadurch erzielen, dass die Aufnahmeöffnung des Verbindungselements bei betätigtem Verbindungselement eng beabstandet zu der Anschlussöffnung des Ventilkörpers angeordnet ist. Hierdurch lässt sich das Ventil sehr kompakt ausführen. Zudem lässt sich das Anschlussrohrstück sehr einfach durch die Aufnahmeöffnung mit der Anschlussöffnung verbinden.

Zudem ist es vorteilhaft, dass das Verbindungselement an dem Ventilkörper so angeordnet ist, dass das in der Anschlussöffnung und der Aufnahmeöffnung angeordnete Anschlussrohrstück bei betätigtem Verbindungselement einen in dem Verbindungsbereich unbeeinflussten Rohrstückbereich aufweist, wodurch eine leichte Verbindung und Lösung des Anschlussrohrstücks realisierbar ist. Dadurch wird der Anschluss des Anschlussrohrstücks an das Ventil erleichtert, da kein oder nur ein sehr geringer Widerstand zur Positionierung des Anschlussrohrstücks überwunden werden muss. Aufgrund des geringen Widerstands erkennt der Bediener beim Verbinden des Anschlussrohrs mit dem Ventil genauer einen erhöhten Widerstand, der auftritt, wenn das Anschlussrohrstück auf eine Stoßkante trifft. Hierdurch lässt sich zuverlässig erkenne n, dass die Einstecktiefe des Anschlussrohrstücks erreicht ist.

Vorzugsweise ist das Verbindungselement als ein einstückiges, gebogenes Federblech ausgebildet, welches die Aufnahmeöffnung in dem federnden Bereich des Federblechs aufweist. Das Federblech ist dabei so gebogen, dass es zwei Bereiche aufweist. Die Bereiche weisen dabei unterschiedliche Größen auf. Vorzugsweise weist der nicht federnde Bereich eine deutlich geringere Größe auf, als der federnde Bereich samt Aufnahmeöffnung. Insbesondere sind die Abmaße des nicht federnden Bereichs in Richtung des federnden Bereichs deutlich geringer, als die Abmaße des federnden Bereichs in Richtung des nicht federnden Bereichs. Hierdurch ergeben sich günstige Hebelverhältnisse, die eine Betätigung des Verbindungselements erleichtern. Zudem wird so ausreichend Platz zur Ausbildung einer Aufnahmeöffnung in dem federnden Bereich bereitgestellt.

Eine bevorzugte Ausführungsform des Ventils sieht vor, dass die Aufnahmeöffnung des Verbindungselements so ausgebildet is t, dass diese das Anschlussrohrstück bei parallel zueinander angeordneten Querschnittsflächen des Anschlussrohrstücks, der Anschlussöffnung und der Aufnahmeöffnung umschließt und sich bei winkliger Anordnung der Querschnittsfläche der Aufnahmeöffnung zu den beiden anderen Querschnittsflächen eine kraftschlüssige Verbindung zwischen Verbindungselement und Anschlussrohrstück bildet. Auf diese Weise lässt sich auf kleinstem Bauraum eine sichere Verbindung realisieren.

Eine weitere bevorzugte Ausführungsform des erfindungsgemäßen Ventils sieht vor, dass die Anschlussöffnung, die Aufnahmeöffnung und das Anschlussrohrstück das im Wesentlichen gleiche Querschnittsprofil aufweisen, wobei das Querschnittsprofil vorzugsweise eine geometrische Figur aus der Gruppe umfassend einen Kreis, ein Oval, ein Rechteck und ein Polygon ist. Dadurch, dass gleiche Querschnittsprofile verwendet werden, lassen sich relativ spielfreie Verbindungen herstellen, welche nur einen geringen Abdichtungsaufwand benötigen. Zudem ist nur durch eine nahezu spielfreie Verbindung eine optimale Ausnutzung des zur Verfügung stehenden Bauraums möglich.

Ein Querschnittsprofil kann jede mögliche Form aufweisen. Vorteilhaft ist es jedoch, wenn das Querschnittsprofil eine einfache geometrische Form aufweist, da der Herstellungsaufwand sich so reduzieren lässt. Insbesondere haben sich Kreis-Querschnittsprofile in Anwendungen durchgesetzt. Für diese Querschnittsprofile gibt es Normen, so dass sich bei Verwendung dieser Querschnittsprofile standardisierte Ventile herstellen lassen. Zudem weist ein Kreisquerschnitt das günstigste Verhältnis von Umfang zu Querschnittsfläche auf, was wiederum zu einer optimalen Bauraumausnutzung führt.

Vorzugsweise ist in der Anschlussöffnung ein Dichtungselement zur Abdichtung der Verbindung angeordnet. Trotz der nahezu spielfreien Verbindung von Anschlussrohrstück, Verbindungselement und Ventilkörper ist es nicht möglich, das Anschlussrohrstück mit dem Ventil ohne zusätzliches Dichtungselement ausreichend abzudichten. Aus diesem Grund ist ein geeignetes Dichtungselement notwendig. Dieses ist vorzugsweise vollständig innerhalb der Anschlussöffnung angeordnet. Das Dichtungselement umschließt dabei den Endbereich des Anschlussrohrstücks.

Bevorzugt ist es, dass zur beidseitigen Anschlagsbegrenzung bei der Betätigung des Verbindungselements das Verbindungselement mit endseitiger, nach innen gebogener Nase mit einer in dem Ventilkörper ausgebildeten Ausnehmung zusammenwirkt. Auf diese Weise ist ein einfach herzustellendes Ventil mit einem einstückig ausgebildeten Ventilkörper bei einer geringen Bauteilanzahl realisierbar.

Alternativ hierzu ist es auch möglich, dass zur beidseitigen Anschlagsbegrenzung bei der Betätigung des Verbindungselements das Verbindungselement in einem zwischen dem ersten und dem zweiten Ventilkörperteil ausgebildeten Spalt angeordnet ist und die Betätigung über eine durch das zweite Ventilkörperteil durchgehende Öffnung erfolgt. Hierdurch weist das Ventil zwei Führungsabschnitte auf, die eine verbesserte Führung des Anschlussrohrstücks und dadurch eine verbesserte Halteeigenschaft gewährleisten.

Weitere die Erfindung verbessernde Maßnahmen sind in den abhängigen Ansprüchen angegeben oder werden nachstehend gemeinsam mit der Beschreibung bevorzugter Ausführungsbeispiele der Erfindung anhand der Figuren näher dargestellt. Es zeigt:
- Fig. 1: einen Ausschnitt aus einem Querschnitt durch ein Ventil mit einem zweistückig ausgebildeten Ventilkörper,
- Fig. 2: eine Seitenansicht des Ventils nach Figur 1, und
- Fig. 3: einen Ausschnitt aus einem Querschnitt durch ein weiteres Ventil mit einem einstückig ausgebildeten Ventilkörper.

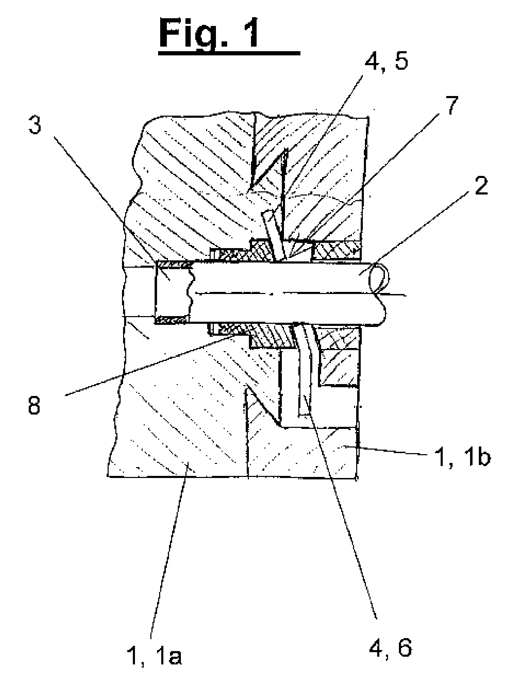

In Fig. 1 ist ein Ventil mit einem zweistückig ausgebildeten Ventilkörper 1 dargestellt. Dabei sind ein erstes Ventilkörperteil 1a und ein zweites Ventilkörperteil 1b, das als Deckel ausgebildet ist, über eine Art Schwalbenschwanzverbindung miteinander verbunden. Das zweite Ventilkörperteil 1b weist eine Durchgangsöffnung auf, durch die ein Anschlussrohrstück 2 zu dem ersten Ventilkörperteil 1a geführt ist. Das erste Ventilkörperteil 1a weist eine Anschlussöffnung 3 zum Anschluss des Anschlussrohrstücks 2 an das Ventil auf, wobei die Anschlussöffnung 3 und die Durchgangsöffnung koaxial angeordnet sind. Die beiden Öffnungen sind als koaxial zueinander angeordnete Bohrungen ausgebildet. Die Anschlussöffnung 3 ist dabei als abgestufte Öffnung bzw. Bohrung ausgebildet. Das Anschlussrohrstück 2 ist als Schlauch mit einem runden Querschnittsprofil ausgebildet. Zwischen dem ersten Ventilkörperteil 1a und dem zweiten Ventilkörperteil 1b ist an dem ersten Ventilkörperteil 1a im Bereich der Anschlussöffnung 3 ein als Federblech ausgebildetes Verbindungselement 4 angeordnet. Das Federblech weist einen ersten Bereich 5, der mit dem ersten Ventilkörperteil 1a ortsfest verbunden ist und einen zweiten Bereich 6, der federnd ausgebildet ist, auf. In dem zweiten, federnden Bereich 6 ist eine durch das Verbindungselement 4 durchgehende Aufnahmeöffnung 7 ausgebildet. Die Aufnahmeöffnung 7 weist praktisch den gleichen Querschnitt wie die Anschlussöffnung 3 und das Anschlussrohrstück 2 auf. In der Anschlussöffnung 3 ist zudem ein Dichtungselement 8 angeordnet, das einen Durchbruch zur Durchführung des Anschlussrohrstücks 2 aufweist. Das Dichtungselement 8 hat die Aufgabe, gegen das Anschlussrohrstück 2 und gegen das Gehäuse 1 dynamisch abzudichten. Das Dichtungselement 8 kontaktiert dabei neben dem ersten Ventilkörperteil 1a auch das Verbindungselement 4. Dabei ist die Kontaktfläche des Dichtungselements 8 als Gegenlager zu dem Verbindungselement 4 ausgebildet. Das Dichtungselement 8 ist aus einem elastischen Material hergestellt und in einem Toleranzbereich beweglich in der Anschlussöffnung 3 gelagert. Das als Federblech ausgebildete Verbindungselement 4 ist so an dem ersten Ventilkörperteil 1a angeordnet, dass die Querschnittsfläche der Aufnahmeöffnung 7 einen Winkel mit der Querschnittsfläche der Anschlussöffnung 3 beziehungsweise mit der Querschnittsfläche des in der Anschlussöffnung 3 eingesteckten und diese in axialer Richtung verlängernde Anschlussrohrstücks 2 bildet. Bei Betätigung des Verbindungselements 4, etwa beim Einstecken oder Herausziehen des Anschlussrohrstücks 2 in die beziehungsweise aus der Anschlussöffnung 3 wird der federnde Bereich 5 des Verbindungselements 4 in Richtung des ersten Ventilkörperteils 1a gedrückt, so dass die Querschnittsfläche der Aufnahmeöffnung 7 nahezu parallel zu der Querschnittsfläche der Anschlussöffnung 3 ausgerichtet wird. Hierdurch lässt sich das Anschlussrohrstück 2 mühelos in die Anschlussöffnung 3 einstecken beziehungsweise aus dieser herausziehen. Beim Einstecken des Anschlussrohrstücks 2 wird die Einstecktiefe des Anschlussrohrstücks 2 durch die abgestufte Anschlussöffnung 3 begrenzt. Dabei ist die entsprechende Einstecktiefe des Anschlussrohrstücks 2 erreicht, sobald die Stirnseite des Anschlussrohrstücks 2 auf eine durch die abgestufte Anschlussöffnung 3 resultierende Stoßkante trifft. Ist die entsprechende Einstecktiefe erreicht, wird die Betätigung des Verbindungselements 4 aufgehoben und das Verbindungselement 4 federt in seine Ausgangslage zurück. Durch die winklige Anordnung des Verbindungselements 4, genauer der Aufnahmeöffnung 7, entsteht an der Kontaktfläche zwischen Verbindungselement 4 und dem Anschlussrohrstück 2 eine Klemmkraft, die ein Herausziehen des Anschlussrohrstücks 2 aus der eingesteckten Position verhindert. Die Klemmkraft wird erhöht, wenn in der Anschlussöffnung 3 ein Druck ansteht und so über die Dichtlippe des Dichtelements 8 eine zusätzliche axiale Kraft über das Dichtelement 8 auf das Verbindungselement 4 wirkt.

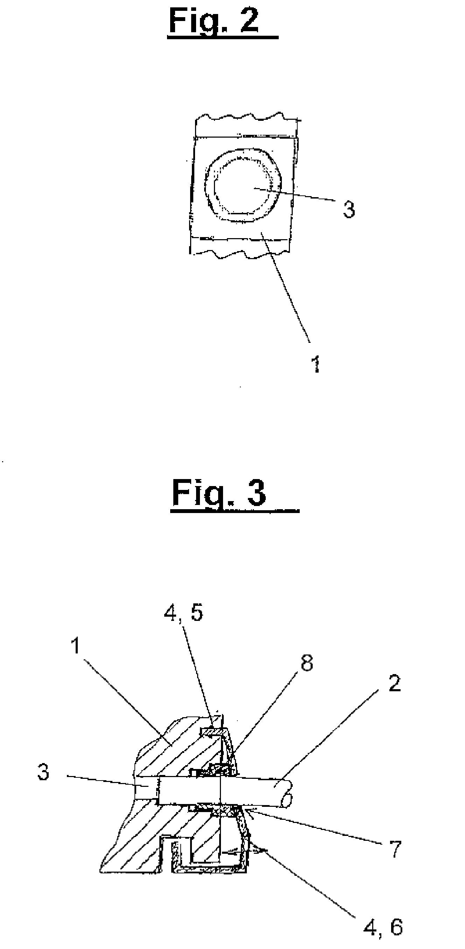

In Fig. 2 ist ein Teil der Schmalseite eines Ventilkörpers 1 mitsamt der abgestuften Anschlussöffnung 3 abgebildet. Die Anschlussöffnung 3 ist eine Bohrung. Der Bohrungsdurchmesser ist dabei nur unwesentlich kleiner als die Breite des Ventils, so dass eine optimale Raumnutzung gewährleistet ist.

Fig. 3 zeigt einen Ausschnitt aus einem Querschnitt durch ein weiteres Ventil, hier mit einem einstückig ausgebildeten Ventilkörper 1. Das Verbindungselement 4 ist hier frei zugänglich an einer Außenseite des Ventilkörpers 1 angeordnet, so dass eine Durchgangsöffnung oder ähnliche Materialaussparungen zur Betätigung des Verbindungselements 4 entfallen. Zur Sicherung des Verbindungselements 4 beispielsweise gegen Überbelastung oder Fehlbedienung ist eine Nut oder Ausnehmung in dem Ventilkörper 1 ausgebildet, die den Betätigungsweg des durch endseitiges Zusammenwirken mit einer nach innen gebogenen Nase des Verbindungselements 4 begrenzt und zugleich eine Art Führung darstellt. Der Aufbau entspricht bis auf die vorstehenden Ausnahmen weitestgehend dem Aufbau des in Fig. 1 beschriebenen Ventils. Die Verbindung zwischen Anschlussrohrstück und Ventil funktioniert nach dem gleichen Prinzip, welches in der Beschreibung zu Fig. 1 ausführlich dargelegt ist.

Die vorliegende Erfindung ist nicht allein beschränkt auf eine Anwendung bei einem elektropneumatischen Mehrwegeventil. Es ist auch ein Einsatz bei einem mechanisch oder pneumatisch betätigbaren Ventil denkbar.

### Bezugszeichenliste

- **1**: Ventilkörper
- **1 a**: Erstes Ventilkörperteil
- **1 b**: Zweites Ventilkörperteil
- **2**: Anschlussrohrstück
- **3**: Anschlussöffnung
- **4**: Verbindungselement
- **5**: Erster Bereich (des Verbindungselements)
- **6**: Zweiter Bereich (des Verbindungselements)
- **7**: Aufnahmeöffnung
- **8**: Dichtungselement

## Patentansprüche

1. Ventil zum Schalten eines Druckmittelflusses, insbesondere elektropneumatisches Mehrwegeventil, mit einem eine Ventilmechanik enthaltenden Ventilkörper (1), an dem mindestens eine Anschlussöffnung (3) zur Aufnahme eines Anschlussrohrstücks (2) für eine Arbeitsleitung oder eine Speisedruckleitung vorgesehen ist,
**dadurch gekennzeichnet, dass** in dem Bereich vor der Anschlussöffnung (3) ein blechzungenartiges Verbindungselement (4) mit einer zu der Anschlussöffnung (3) korrespondierenden, benachbarten Aufnahmeöffnung (7) angeordnet ist, wobei der Winkel zwischen der Querschnittsfläche der Aufnahmeöffnung (7) und der Querschnittsfläche der Anschlussöffnung (3) bei Betätigung des am Ventilkörper (1) befestigten Verbindungselements (4) veränderbar ist, um ein Verklemmen oder ein Lösen eines Anschlussrohrstücks (2) zu realisieren.

2. Ventil nach Anspruch 1,
**dadurch gekennzeichnet, dass** die Anschlussöffnung (3) des Ventilkörpers (1) zur Aufnahme des Anschlussrohrstücks (2) als eine abgestufte Bohrung ausgebildet ist, um durch die Abstufung die Einstecktiefe des Anschlussrohrstücks (2) zu begrenzen.

3. Ventil nach einem der vorherigen Ansprüche,
**dadurch gekennzeichnet, dass** das Verbindungselement (4) mindestens einen ersten, nicht federnden Bereich (5) und einen zweiten, federnden Bereich (6) aufweist, wobei zumindest der zweite, federnde Bereich (6) aus Federblech hergestellt ist.

4. Ventil nach Anspruch 3,
**dadurch gekennzeichnet, dass** das Verbindungselement (4) mit seinem ersten, nicht federnden Bereich (5) im Bereich der Anschlussöffnung (3) durch Einstecken in eine korrespondierende Ausnehmung mit dem Ventilkörper (1) ortsfest verbunden ist.

5. Ventil nach Anspruch 3,
**dadurch gekennzeichnet, dass** der federnde Bereich (6) in axialer Richtung der Anschlussöffnung (3) elastisch verformbar ist, um das Verbindungselement (4) zu betätigen.

6. Ventil nach einem der vorherigen Ansprüche,
**dadurch gekennzeichnet, dass** die Aufnahmeöffnung (7) des Verbindungselements (4) bei betätigtem Verbindungselement (4) eng beabstandet zu der Anschlussöffnung (3) des Ventilkörpers (1) angeordnet ist.

7. Ventil nach einem der vorherigen Ansprüche,
**dadurch gekennzeichnet, dass** das Verbindungselement (4) an dem Ventilkörper (1) so angeordnet ist, dass das in der Anschlussöffnung (3) und der Aufnahmeöffnung (7) angeordnete Anschlussrohrstück (2) bei betätigtem Verbindungselement (4) einen in dem Verbindungsbereich unbeeinflussten Rohrstückbereich aufweist, um ein leichtes Lösen des Anschlussrohrstücks (2) zu realisieren.

8. Ventil nach einem der vorherigen Ansprüche,
**dadurch gekennzeichnet, dass** das Verbindungselement (4) insgesamt als ein einstückiges, gebogenes Federblech ausgebildet ist, welches die Aufnahmeöffnung (7) in dem federnden Bereich (6) des Federblechs aufweist.

9. Ventil nach einem der vorherigen Ansprüche,
**dadurch gekennzeichnet, dass** die Anschlussöffnung (3), die Aufnahmeöffnung (7) und das Anschlussrohrstück (2) das im Wesentlichen gleiche Querschnittsprofil aufweisen, wobei das Querschnittsprofil vorzugsweise eine geometrische Figur aus der Gruppe umfassend einen Kreis, ein Oval, ein Rechteck und ein Polygon ist.

10. Ventil nach einem der vorherigen Ansprüche,
**dadurch gekennzeichnet, dass** innerhalb der Anschlussöffnung (3) ein Dichtungselement (8) zur Abdichtung des Anschlussrohrstücks (2) angeordnet ist.

11. Ventil nach einem der vorherigen Ansprüche,
**dadurch gekennzeichnet, dass** das Verbindungselement (4) an einer Schmalseite des Ventilkörpers (1) angeordnet ist.

12. Ventil nach Anspruch 3,
**dadurch gekennzeichnet, dass** zur beidseitigen Anschlagsbegrenzung bei der Betätigung des Verbindungselements (4) das Verbindungselement (4) in eine endseitige, nach innen gebogene Nase ausläuft, die mit einer in dem Ventilkörper (1) ausgebildeten Ausnehmung zusammenwirkt.

13. Ventil nach Anspruch 3,
**dadurch gekennzeichnet, dass** zur beidseitigen Anschlagsbegrenzung bei der Betätigung des Verbindungselements (4) das Verbindungselement (4) in einem zwischen dem ersten und dem zweiten Ventilkörperteil (1a, 1b) ausgebildeten Spalt angeordnet ist, und die Betätigung über eine durch das zweite, äußere Ventilkörperteil (1b) durchgehende Öffnung erfolgt.
